# EUROPÄISCHE PATENTSCHRIFT

(11) **EP 3 236 132 B1**
(45) Veröffentlichungstag und Bekanntmachung des Hinweises auf die Patenterteilung: **18.09.2019**
(21) Anmeldenummer: 16166736.5
(22) Anmeldetag: 22.04.2016
(51) Int. Cl.: F17C 9/02

(54) **TANKSYSTEM**
TANK SYSTEM
SYSTÈME DE CITERNE

(43) Veröffentlichungstag der Anmeldung: 25.10.2017
(73) Patentinhaber: SALZBURGER ALUMINIUM AKTIENGESELLSCHAFT, 5651 Lend (AT)
(72) Erfinder: LIND, Christoph, 5671 Bruck an der Glocknerstraße (AT); RASSER, Christian, 5660 Taxenbach (AT); BERGER, Simon, 6391 Fieberbrunn (AT)
(74) Vertreter: Weiser, Andreas

(56) Entgegenhaltungen:
- WO-A1-2015/074148
- WO-A1-2016/172803
- CN-Y- 201 186 605
- US-A1- 2013 105 235

## Beschreibung

Die vorliegende Erfindung betrifft ein Tanksystem, umfassend einen Behälter zur Aufnahme eines Zweiphasengemischs aus Kryogas und Kryoflüssigkeit mit einem ersten Drucksensor zum Messen des Behälterdrucks, eine von einem Kopfbereich des Behälters ausgehende erste Entnahmeleitung für Kryogas und eine von einem Bodenbereich des Behälters ausgehende zweite Entnahmeleitung für Kryoflüssigkeit, eine Speiseleitung zum Speisen eines Verbrauchers, in welche beide Entnahmeleitungen münden, und ein Heizelement, durch welches die Speiseleitung geführt ist. Die Erfindung betrifft ferner eine Anlage mit zumindest zwei solchen Tanksystemen und ein Verfahren zum Steuern eines solchen Tanksystems.

Um den Energiegehalt von Energieträgern, welche unter Normalbedingungen gasförmig sind, zu erhöhen, werden diese für Transport- und Lagerungszwecke entweder komprimiert und in einem Druckbehälter gespeichert oder auf Tieftemperatur abgekühlt, dabei verflüssigt und in temperaturisolierten Behältern gespeichert. So werden beispielsweise zum Antrieb von Fahrzeugen verflüssigtes Erdgas (Liquefied Natural Gas, LNG) oder verflüssigter Wasserstoff als Zweiphasengemisch mit hoher Energiedichte gespeichert, um hinterher beispielsweise zum Betrieb von Verbrennungskraftmaschinen oder Brennstoffzellen der Fahrzeuge genutzt zu werden.

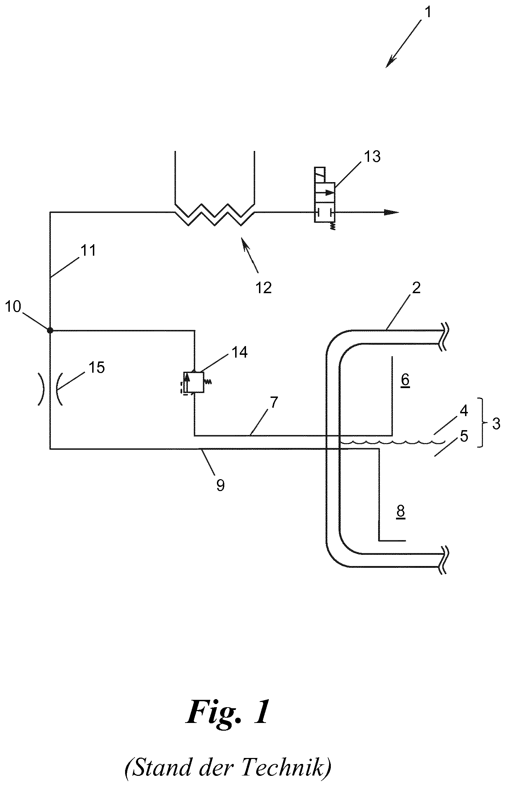

Fig. 1 zeigt ein solches Tanksystem gemäß dem Stand der Technik in einem vereinfachten Hydraulikschema. Das Tanksystem 1 hat einen temperaturisolierten doppelwandigen Behälter 2, in welchem ein Zweiphasengemisch 3 aus Kryogas 4 und Kryoflüssigkeit 5 aufgenommen ist. Wie in Fig. 1 ersichtlich, befindet sich das weniger dichte Kryogas 4 im Wesentlichen in einem Kopfbereich 6 des Behälters 2, von welchem Kopfbereich 6 eine erste Entnahmeleitung 7 für Kryogas 4 ausgeht, wogegen sich die dichtere Kryoflüssigkeit 5 in einem Bodenbereich 8 des Behälters 2 sammelt, von welchem Bodenbereich 8 eine zweite Entnahmeleitung 9 für Kryoflüssigkeit 5 ausgeht. Beide Entnahmeleitungen 7, 9 münden an einer Einmündung 10 in eine Speiseleitung 11. Die Speiseleitung 11 ist in weiterer Folge durch ein Heizelement 12, z.B. einen Wärmetauscher, geführt, in welchem das kryogene Zweiphasengemisch 3 verdampft wird. Ein an das Heizelement 12 anschließendes und somit außerhalb des kryogenen Bereichs liegendes Schaltventil 13 öffnet oder schließt die Speiseleitung in Richtung des Verbrauchers, z.B. eines Fahrzeugantriebs. Das Schaltventil 13 dient dabei als automatisches Abschaltventil und muss, wie alle vorgelagerten Elemente, vor Beschädigung von außen besonders geschützt werden.

Im Falle von Flüssigerdgas steht der Behälter 2 unter einem Druck zwischen etwa 7 bis 10 bar, bei welchem ein Betanken erfolgt, und etwa 16 bar, oberhalb dessen ein kontrolliertes Abdampfen ("boil-off") über in Fig. 1 nicht dargestellte Sicherheitsventile erfolgt.

Da trotz Isolation des Behälters 2 ein Temperatureintrag von außen in den Behälter 2 nicht gänzlich verhindert werden kann, steigt während Stehzeiten, d.h ohne Verbrauch, der Behälterdruck im Behälter 2 um beispielsweise etwa 1 bar pro Tag.

Um nach längerer Stehzeit den Behälterdruck rasch abzusenken und so Abdampfverluste möglichst gering zu halten, soll vorrangig Kryogas 4 entnommen werden, da dies den Behälterdruck wesentlich rascher als die Entnahme von Kryoflüssigkeit 5 reduziert. Bei niedrigem Behälterdruck und/oder großem Leistungsbedarf des Verbrauchers soll hingegen vorrangig Kryoflüssigkeit 5 entnommen werden. Dazu ist aus dem Stand der Technik eine sogenannte "Economizer-Schaltung" bekannt, welche in der ersten Entnahmeleitung 7 ein Überdruckventil 14 und in der zweiten Entnahmeleitung 9 eine Drossel 15 vorsieht. Das Überdruckventil 14 öffnet die erste Entnahmeleitung 7, wenn der Behälterdruck einen Schwellwert überschreitet und deshalb vorrangig Kryogas 4 dem Verbraucher zugeführt werden soll, und schließt die erste Entnahmeleitung 7 bei Unterschreiten des Schwellwerts. Die Drossel 15 reduziert den Druck in der zweiten Entnahmeleitung 9 um beispielsweise 1 bar, um bei geöffnetem Überdruckventil 14 an der Einmündung 10 Kryogas 4 den Vorrang zu geben und so den Behälterdruck abzubauen.

Nachteilig an der Economizer-Schaltung ist jedoch, dass die Drossel 15 dauerhaft den Druck in der zweiten Entnahmeleitung 9 reduziert, sodass der Behälterdruck letztlich um beispielsweise 1 bar höher als in der Speiseleitung bleibt. Ferner wird infolge zumindest geringfügiger Beimengung von Kryoflüssigkeit 5 in die Speiseleitung 11 auch bei vorrangiger Entnahme von Kryogas 4 der Abbau des Behälterdrucks verlangsamt.

Aus der WO 2016/172803 A1 sind ein System und ein Verfahren zur Steuerung des Innendrucks eines Behälters für ein kryogenes Zweiphasengemisch bekannt, bei welchem unter anderem bei niedrigem Behälterdruck Kryoflüssigkeit, bei mittlerem Behälterdruck sowohl Kryoflüssigkeit als auch Kryogas und bei hohem Behälterdruck Kryogas aus dem Behälter entnommen wird. Dabei kann es jedoch z.B. zu einer Unterversorgung des Verbrauchers bei hoher Verbraucherabnahme und hohem Tankdruck kommen. WO 2015/074148 A1 offenbart ein System zum Zuführen eines Brennstoffs in gasförmigem Zustand in ein Luftansaugsystem eines gasbetriebenen Verbrennungsmotors.

Die vorliegende Erfindung setzt sich zum Ziel, ein Tanksystem, eine Anlage und ein Verfahren zur Steuerung zu schaffen, in welchem bei bedarfsgerechter Versorgung des Verbrauchers der Behälterdruck rascher und weiter abgebaut werden kann, sodass Abdampfverluste weiter reduziert werden.

Gemäß einem ersten Aspekt der Erfindung wird dieses Ziel mit einem Tanksystem der einleitend genannten Art erreicht, welches umfasst:
eine an den ersten Drucksensor angeschlossene Ventilschaltung, welche zumindest zwischen einem ersten Schaltzustand, in welchem die erste Entnahmeleitung geöffnet und die zweite Entnahmeleitung zumindest in Richtung des Verbrauchers geschlossen ist, und einem zweiten Schaltzustand, in welchem die erste Entnahmeleitung zumindest in Richtung des Verbrauchers geschlossen und die zweite Entnahmeleitung geöffnet ist, umschaltbar ist,
wobei die Ventilschaltung den ersten Schaltzustand einnimmt, wenn der gemessene Behälterdruck größer als ein vorgegebener erster Schwellwert ist, und den zweiten Schaltzustand einnimmt, wenn der gemessene Behälterdruck kleiner als der erste Schwellwert ist.

Auf diese Weise kann je nach Behälterdruck ausschließlich Kryogas oder ausschließlich Kryoflüssigkeit dem Behälter entnommen werden; eine Drossel entfällt und mit ihr deren nachteilige Wirkung. Durch reine Kryogas-Entnahme im ersten Schaltzustand wird der Behälterdruck raschest möglich abgebaut, und zwar ohne Drossel-bedingten Restüberdruck im Behälter. Das ermöglicht längere Stehzeiten des Tanksystems auch nach nur kurzer Betriebsdauer des Verbrauchers und somit geringere Abdampfverluste als mit einem herkömmlichen Tanksystem. Andererseits wird im zweiten Schaltzustand bei schwellwertunterschreitendem Behälterdruck dem Behälter reine Kryoflüssigkeit mit wesentlich höherer Energiedichte entnommen und der Behälterdruck dadurch nur minimal verändert.

Dabei hat das Tanksystem einen mit der Ventilschaltung verbundenen zweiten Drucksensor zum Messen eines verbraucherseitigen Speisedrucks der Speiseleitung, wobei die Ventilschaltung zwischen den genannten Schaltzuständen und einem dritten Schaltzustand umschaltbar ist, in welchem beide Entnahmeleitungen geöffnet sind, und wobei die Ventilschaltung den dritten Schaltzustand einnimmt, wenn der gemessene Behälterdruck größer als der erste Schwellwert und zugleich der gemessene Speisedruck kleiner als ein vorgegebener zweiter Schwellwert ist. Aufgrund der wesentlich höheren volumetrischen Energiedichte der Kryogflüssigkeit im Vergleich zum Kryogas - bei Flüssigerdgas typisch etwa 600 mal höher - kann somit bei zu geringem bzw. sinkendem Speisedruck infolge erhöhter Abnahme des Verbrauchers der Speisedruck wieder rasch erhöht werden, wobei dennoch der Behälterdruck aufgrund der zusätzlichen Entnahme von Kryogas abgebaut wird.

Besonders günstig ist es, wenn die Ventilschaltung ferner zwischen den genannten Schaltzuständen und einem vierten Schaltzustand umschaltbar ist, in welchem beide Entnahmeleitungen zumindest in Richtung des Verbrauchers geschlossen sind. So kann ein zusätzliches Abschaltventil entfallen und die Zufuhr zum Verbraucher völlig unterbunden werden, z.B. wenn dieser keinen Energiebedarf hat. Da ferner bei der Verwendung in Kraftfahrzeugen gemäß der Richtlinie ECE R110 ein automatisches Abschaltventil vorgeschrieben ist, welches zusammen mit dem Behälter innerhalb eines gegen Beschädigungen von außen geschützten Bereichs zu liegen hat und diesen Bereich gegenüber allen außenliegenden Komponenten und Verbrauchern im Falle einer solchen Beschädigung abschaltet, kann das Heizelement außerhalb dieses geschützten Bereichs angeordnet sein, was den Aufbau des Tanksystems vereinfacht.

Um einen raschen Abbau des Behälterdrucks bis zu einem niedrigen Niveau sicherzustellen, ist es vorteilhaft, wenn der erste Schwellwert kleiner als 12 bar, bevorzugt kleiner als 10 bar, besonders bevorzugt zwischen etwa 7 bar und etwa 9 bar ist.

In einer vorteilhaften Variante hat die Ventilschaltung für die zweite Entnahmeleitung ein Rückschlagventil, welches diese bei Schließen in Richtung des Verbrauchers in Richtung des Behälters geöffnet lässt. Alternativ dazu oder ergänzend kann die Ventilschaltung auch für die erste Entnahmeleitung ein Rückschlagventil haben, welches diese bei Schließen in Richtung des Verbrauchers in Richtung des Behälters geöffnet lässt. So kann ein Überdruck in der Speiseleitung, wenn sich diese z.B. während einer Stehzeit erwärmt, durch Rückfluss in den Behälter abgebaut werden, was die Speiseleitung schützt und zugleich Abdampfverluste weiter verringert.

Bevorzugt hat die zweite Entnahmeleitung eine Pumpe für Kryoflüssigkeit. Dies stellt die Entnahme von Kryoflüssigkeit völlig unabhängig vom Behälterdruck sicher, d.h. auch bei einem Behälterdruck von mehr als etwa 12 bar oder insbesondere weniger als etwa 7 bar.

Ein besonders einfacher Aufbau des Tanksystems ergibt sich, wenn die Ventilschaltung ein die erste Entnahmeleitung öffnendes und zumindest in Richtung des Verbrauchers schließendes erstes steuerbares Schaltventil und ein davon separates die zweite Entnahmeleitung öffnendes und zumindest in Richtung des Verbrauchers schließendes zweites steuerbares Schaltventil umfasst. Dabei werden insbesondere kryotaugliche 2-Wege-Schaltventile mit je zwei Schaltzuständen eingesetzt.

Zum Steuern der Ventilschaltung bzw. der Schaltventile kann z.B. ein mechanischer Überdruckschalter verwendet werden. Bevorzugt sind hingegen die Schaltventile elektromagnetische Schaltventile und die Ventilschaltung umfasst eine an den zumindest einen Drucksensor angeschlossene Steuerelektronik, welche dafür ausgebildet ist, Messwerte von dem zumindest einen Drucksensor zu empfangen und in Abhängigkeit davon die Schaltventile zu steuern. Eine solche einfach handhabbare, einstellbare und auch zuverlässige Steuerelektronik erlaubt einen flexiblen Einsatz des Tanksystems.

In einem zweiten Aspekt schafft die Erfindung eine Anlage mit zumindest zwei Tanksystemen der beschriebenen Art, wobei die Speiseleitungen der Tanksysteme vereinigt über ein einziges gemeinsames Heizelement geführt sind. Weitere Heizelemente können dadurch entfallen; die Anlage ist somit einfacher im Aufbau. Ferner kann durch geeignete Steuerung der Ventilschaltung der Tanksysteme ein Druckabbau in jedem der Tanksysteme bewerkstelligt werden, sodass z.B. Druckunterschiede ausgeglichen werden.

In einem dritten Aspekt schafft die Erfindung ein Verfahren zum Steuern eines Tanksystems, welches einen Behälter zur Aufnahme eines Zweiphasengemischs aus Kryogas und Kryoflüssigkeit, eine von einem Kopfbereich des Behälters ausgehende erste Entnahmeleitung für Kryogas und eine von einem Bodenbereich des Behälters ausgehende zweite Entnahmeleitung für Kryoflüssigkeit, eine Speiseleitung zum Speisen eines Verbrauchers, in welche beide Entnahmeleitungen münden, und ein Heizelement umfasst, durch welches die Speiseleitung geführt ist, mit den Schritten:
Messen des Behälterdrucks und,
wenn der Behälterdruck größer als ein vorgegebener erster Schwellwert ist, Öffnen der ersten Entnahmeleitung und Schließen der zweiten Entnahmeleitung zumindest in Richtung des Verbrauchers,
andernfalls Schließen der ersten Entnahmeleitung zumindest in Richtung des Verbrauchers und Öffnen der zweiten Entnahmeleitung.

Gemäß einer besonders vorteilhaften Variante umfasst das Verfahren die zusätzlichen Schritte:
Messen eines verbraucherseitigen Speisedrucks der Speiseleitung und,
wenn der Behälterdruck größer als der erste Schwellwert und zugleich der Speisedruck kleiner als ein vorgegebener zweiter Schwellwert ist, Öffnen beider Entnahmeleitungen,
und mit den zusätzlichen Schritten:
   Messen eines verbraucherseitigen Speisedrucks der Speiseleitung und,
   wenn der Behälterdruck größer als der erste Schwellwert und zugleich der Speisedruck kleiner als ein vorgegebener zweiter Schwellwert ist, Öffnen beider Entnahmeleitungen.

Bezüglich der Vorteile und weiterer Ausführungsvarianten eines solchen Verfahrens wird auf die vorangegangenen Ausführungen zum Tanksystem verwiesen.

Die Erfindung wird nachfolgend anhand von in den beigeschlossenen Zeichnungen dargestellten Ausführungsbeispielen näher erläutert. In den Zeichnungen zeigen:
Fig. 1 ein Tanksystem gemäß dem Stand der Technik in Form eines vereinfachten Hydraulikschemas;
Fig. 2 ein Tanksystem gemäß der Erfindung in Form eines Hydraulikschemas;
die Fig. 3a und 3b verschiedene Schaltzustände einer Ventilschaltung des Tanksystems aus Fig. 2 in einem Zustandsdiagramm (Fig. 3a) bzw. einem Druckdiagramm (Fig. 3b); und
die Fig. 4a und 4b jeweils eine Anlage mit zwei Tanksystemen gemäß dem Stand der Technik (Fig. 4a) bzw. gemäß der vorliegenden Erfindung (Fig. 4b).

In Bezug auf Fig. 1 wird auf die Erläuterungen in der Beschreibungseinleitung verwiesen.

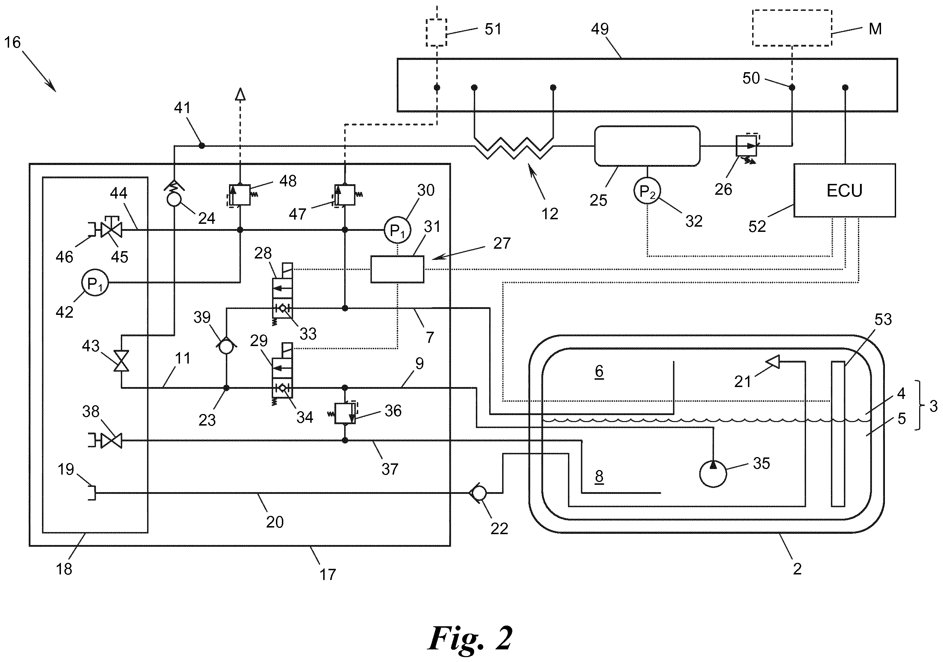

Die Fig. 2, in welcher gleiche Bezugszeichen gleiche Teile wie in Fig. 1 bezeichnen, zeigt ein erfindungsgemäßes Tanksystem 16, z.B. für den Brennstoff eines Fahrzeugs. Das Tanksystem 16 umfasst einen Behälter 2, der ein Zweiphasengemisch 3 aus Kryogas 4 und Kryoflüssigkeit 5 enthält. An den Behälter 2 angeschlossen bzw. in diesen zumindest teilweise integriert ist eine Ventilbaugruppe 17 des Tanksystems 16, welche für den Einsatz in Fahrzeugen - ebenso wie der Behälter 2 selbst - gegenüber Beschädigungen von außen besonders geschützt ist.

Im Beispiel der Fig. 2 hat die Ventilbaugruppe 17 jeweils eine für den Benutzer zugängliche Bedienkonsole 18. Die Bedienkonsole 18 umfasst unter anderem einen Füllstutzen 19 mit einer in den Behälter 2 geführten Füllleitung 20 mit Sprühdüse 21 zum Befüllen des Behälters 2. Zum einfacheren Befüllen kann die Füllleitung 20 ein gegen den Füllstutzen 19 sperrendes Rückschlagventil 22 haben.

Eine erste Entnahmeleitung 7 geht vom Kopfbereich 6 des Behälters 2 aus und entnimmt diesem Kryogas 4. Die sich im Bodenbereich 8 des Behälters 2 sammelnde Kryoflüssigkeit 5 wird von einer dort ausgehenden zweiten Entnahmeleitung 9 entnommen. In der in Fig. 2 dargestellten Variante münden beide Entnahmeleitungen 7, 9 an einer Verbindung 23 in eine einzige, gemeinsame Speiseleitung 11.

Die Speiseleitung 11 gemäß Fig. 2 führt - optional gesichert durch ein Rohrbruchsicherungsventil 24 - aus der Ventilbaugruppe 17 hinaus und durch ein Heizelement 12 hindurch zu einem Verbraucher M, z.B. einem Fahrzeugantrieb. Das Heizelement 12 erwärmt Kryogas 4 bzw. Kryoflüssigkeit 5 in der Speiseleitung 11 auf etwa Normaltemperatur und verdampft dabei jegliche Kryoflüssigkeit 5 vollständig. Optional kann die Speiseleitung 11 verbraucherseitig des Heizelements 12 einen Pufferspeicher 25 und ein Druckregelventil 26 zur gleichmäßigen, geregelten Versorgung des Verbrauchers M haben.

Zur gezielten Entnahme von Kryogas 4 und/oder Kryoflüssigkeit 5 aus dem Behälter 2 hat das Tanksystem 16 ferner eine Ventilschaltung 27. Die Ventilschaltung 27 kann z.B. ein einziges 4-Wege-Ventil oder ein einziges 3-Wege-Ventil sein, in welchem letzteren Fall die Verbindung 23 in das 3-Wege-Ventil integriert ist. Im Beispiel von Fig. 2 umfasst die Ventilschaltung 27 zwei separate steuerbare Schaltventile 28, 29, u.zw. ein die erste Entnahmeleitung 7 öffnendes oder zumindest in Richtung des Verbrauchers M schließendes erstes Schaltventil 28 und ein davon separates, die zweite Entnahmeleitung 9 öffnendes oder zumindest in Richtung des Verbrauchers M schließendes zweites Schaltventil 29.

In einer alternativen Variante (nicht dargestellt) mündet die zweite Entnahmeleitung 9 nicht in die Speiseleitung 11, sondern in eine von dieser separate weitere Speiseleitung, welche durch ein vom genannten Heizelement 12 separates weiteres Heizelement geführt ist und den Verbraucher M, z.B. einen Fahrzeugmotor, speist. Die erste Entnahmeleitung 7 speist dabei über die Speiseleitung 11 und das Heizelement 12 entweder einen separaten Verbraucher, z.B. eine Standheizung eines Fahrzeugs, oder denselben Verbraucher M wie die weitere Speiseleitung.

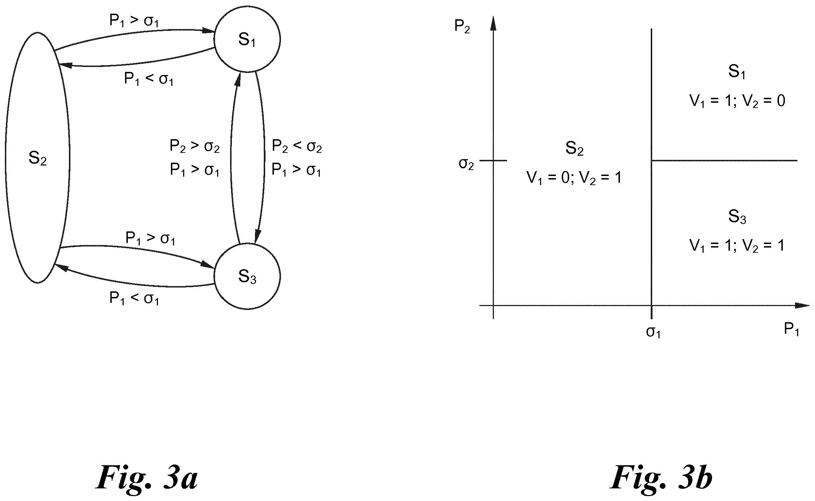

Gemäß den Fig. 3a und 3b ist die Ventilschaltung 27 in Abhängigkeit von einem gemessenen Behälterdruck P₁ des Behälters 2 zumindest zwischen einem ersten Schaltzustand S₁, in welchem die erste Entnahmeleitung 7 geöffnet (V₁ = 1) und die zweite Entnahmeleitung 9 zumindest in Richtung des Verbrauchers M geschlossen (V₂ = 0) ist, sodass dem Behälter 2 ausschließlich Kryogas 4 entnommen wird, und einem zweiten Schaltzustand S₂, in welchem die erste Entnahmeleitung 7 zumindest in Richtung des Verbrauchers M geschlossen (V₁ = 0) und die zweite Entnahmeleitung 9 geöffnet (V₂ = 1) ist, sodass dem Behälter 2 ausschließlich Kryoflüssigkeit 5 entnommen wird, umschaltbar. Dabei nimmt die Ventilschaltung 27 den ersten Schaltzustand S₁ ein, wenn der gemessene Behälterdruck P₁ größer als ein vorgegebener erster Schwellwert σ₁ ist, und den zweiten Schaltzustand S₂, wenn der gemessene Behälterdruck P₁ kleiner als der erste Schwellwert σ₁ ist. Durch die ausschließliche Entnahme von Kryogas 4 im ersten Schaltzustand S₁ wird der Behälterdruck P₁ raschest möglich reduziert, da Kryogas 4 im Vergleich zu Kryoflüssigkeit 5 eine etwa 600fach geringere volumetrische Energiedichte hat.

Um das Umschalten auch ohne Benutzereingriff zu ermöglichen, kann das Tanksystem 16 ferner einen ersten Drucksensor 30 zum Messen des Behälterdrucks P₁ umfassen. Der erste Drucksensor 30 ist im Inneren des Behälters 2 oder außerhalb angeordnet, gemäß Fig. 2 beispielsweise in der Ventilbaugruppe 17 mit Verbindung zur ersten Entnahmeleitung 7. Die Ventilschaltung 27 umfasst dabei eine Steuerung 31, z.B. einen mechanischen Druckschalter oder eine Steuerelektronik, welche an den ersten Drucksensor 30 angeschlossen ist, den Behälterdruck P₁ bzw. dessen Messwerte empfängt und in Abhängigkeit davon die Ventilschaltung 27 bzw. das erste und zweite Schaltventil 28, 29 steuert.

Optional ist die Ventilschaltung 27 zwischen den genannten Schaltzuständen S₁, S₂ und einem dritten Schaltzustand S₃ umschaltbar, in welchem dritten Schaltzustand S₃ beide Entnahmeleitungen 7, 9 geöffnet (V₁ = 1; V₂ = 1) sind. Wie Fig. 3b zeigt, nimmt die Ventilschaltung 27 den dritten Schaltzustand S₃ ein, wenn der gemessene Behälterdruck P₁ größer als der erste Schwellwert σ₁ und zugleich ein verbraucherseitiger Speisedruck P₂ in der Speiseleitung 11 kleiner als ein vorgegebener zweiter Schwellwert σ₂ ist. Zum Messen des Speisedrucks P₂, z.B. im Pufferspeicher 25, und zum Umschalten ohne Benutzereingriff kann das Tanksystem 16 dazu einen mit der Ventilschaltung 27 verbundenen zweiten Drucksensor 32 haben.

Die Fig. 3a und 3b veranschaulichen die drei Schaltzustände S₁, S₂, S₃ im Betrieb des Tanksystems 16, d.h. beim Speisen des Verbrauchers M. Bei einem den zweiten Schwellwert σ₂ übersteigenden Speisedruck P₂ und zugleich einem den ersten Schwellwert σ₁ übersteigenden Behälterdruck P₁ wird demnach dem Behälter 2 ausschließlich Kryogas 4 entnommen (erster Schaltzustand S₁). Sinkt davon ausgehend der Speisedruck P₂, weil der Verbraucher M hohen Speisebedarf hat, unter den zweiten Schwellwert σ₂, so öffnet die Ventilschaltung 27 zusätzlich die zweite Entnahmeleitung 9, sodass zusätzlich Kryoflüssigkeit 5 in die Speiseleitung 11 gelangt, um im Heizelement 12 verdampft und dem Verbraucher M zugeführt zu werden (dritter Schaltzustand S₃). Fällt hingegen der Behälterdruck P₁, egal ob ausgehend vom ersten Schaltzustand S₁ oder vom dritten Schaltzustand S₃, unter den ersten Schwellwert σ₁, so schließt die Ventilschaltung 27 die erste Entnahmeleitung 7 und öffnet die zweite Entnahmeleitung 9 bzw. hält diese weiter geöffnet (zweiter Schaltzustand S₂), und jeweils umgekehrt. Dies gilt gleichermaßen, wenn mithilfe der ersten Entnahmeleitung 7 der genannte separate Verbraucher gespeist wird, in welchem Fall die erste Entnahmeleitung bei unter den ersten Schwellwert σ₁ fallendem Behälterdruck P₁ geschlossen wird (zweiter Schaltzustand S₂).

Die Ventilschaltung 27 kann ferner zwischen den genannten Schaltzuständen S₁ und S₂ bzw. S₁, S₂ und S₃ (wenn vorgesehen) und einem in den Fig. 3a und 3b nicht dargestellten optionalen vierten Schaltzustand umschaltbar sein, in welchem beide Entnahmeleitungen 7, 9 zumindest in Richtung des Verbrauchers M geschlossen sind. Dieser vierte Schaltzustand entspricht damit einer Abschaltung des Behälters 2 mitsamt der Ventilbaugruppe 17, beispielsweise weil der Verbraucher M keinen Bedarf hat oder aus Sicherheitsgründen bei einer Beschädigung von außen, z.B. einem Unfall des Fahrzeugs.

Wird das Tanksystem 16 für verflüssigtes Erdgas (Liquefied Natural Gas, LNG) eingesetzt, so ist der erste Schwellwert σ₁ z.B. kleiner als 12 bar, bevorzugt kleiner als 10 bar, besonders bevorzugt zwischen etwa 7 und etwa 9 bar, um den Behälterdruck P₁ möglichst rasch auf dieses Niveau zu senken. Ist der Behälter 2 zur Aufnahme eines anderen kryogenen Zweiphasengemischs 3 ausgebildet, so wird der erste Schwellwert σ₁ nach Bedarf festgelegt.

Optional hat die Ventilschaltung 27 für die erste und/oder die zweite Entnahmeleitung 7, 9 ferner ein Rückschlagventil 33, 34, welches die jeweilige Entnahmeleitung 7, 9 beim Schließen in Richtung des Verbrauchers M in Richtung des Behälters 2 geöffnet lässt. Dadurch wird eine mögliche Druckerhöhung in der Speiseleitung 11, z.B. während Stehzeiten, ohne Abdampfverlust in den Behälter 2 rückgespeist. Im Beispiel der Fig. 2 haben das erste Schaltventil 28 und das zweite Schaltventil 29 jeweils ein solches Rückschlagventil 33 bzw. 34 integriert; alternativ könnte zumindest eines der Rückschlagventile 33, 34 auch in einer separaten Bypassleitung des ersten oder zweiten Schaltventils 28, 29 bzw. der Ventilschaltung 27 angeordnet sein.

In einer weiteren optionalen Variante hat die zweite Entnahmeleitung 9 z.B. im Bodenbereich 8 des Behälters 2 oder an einer anderen Stelle eine Pumpe 35, um Kryoflüssigkeit 5 aus dem Behälter 2 auch bei geringem Behälterdruck P₁ von z.B. weniger als etwa 7 bar sicher in die zweite Entnahmeleitung 9 zu fördern. Damit es dabei zu keiner Überdrucksituation in der zweiten Entnahmeleitung 9 kommt, falls diese durch die Ventilschaltung 27 geschlossen ist, hat die zweite Entnahmeleitung 9 im Beispiel der Fig. 2 ein der Ventilschaltung 27 vorgelagertes, d.h. behälterseitiges, optionales Überdruckventil 36. Das Überdruckventil 36 sitzt in der Ventilbaugruppe 17, es könnte alternativ aber auch z.B. im Inneren des Behälters 2 angeordnet sein, und könnte dabei jeweils ins Freie münden; bevorzugt mündet das Überdruckventil 36 aber in eine in den Behälter 2 zurückführende Leitung, hier eine optionale separate Entleerungsleitung 37 des Behälters 2. Die Entleerungsleitung 37 verbindet den Bodenbereich 8 des Behälters 2 mit der Bedienkonsole 18, wo zum manuellen Entleeren des Behälters 2 ein manuelles Absperrventil 38 vorgesehen ist.

Ferner hat dabei in der Ausführungsform nach Fig. 2 die erste Entnahmeleitung 7 ein optionales Rückschlagventil 39, welches ein Eindringen vom Kryoflüssigkeit 5 in die erste Entnahmeleitung 7 und somit eine Kurzschlussförderung von der Pumpe 35 über die zweite Entnahmeleitung 9, die Verbindungsstelle 23 und die erste Entnahmeleitung 7 zurück in den Behälter 2 verhindert. Gemäß Fig. 2 sitzt das Rückschlagventil 39 zwischen Verbindungsstelle 23 und der Ventilschaltung 27 bzw. dem ersten Schaltventil 28; das Rückschlagventil 39 könnte alternativ jedoch auch behälterseitig der Ventilschaltung 27 bzw. des ersten Schaltventils 28 angeordnet sein.

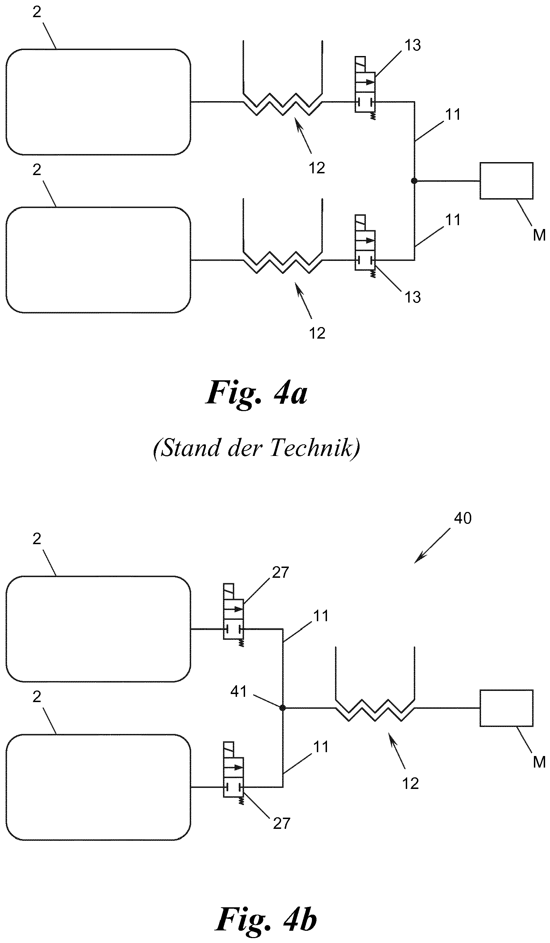

Gemäß den Fig. 4a und 4b können zwei oder mehr Tanksysteme 1, 16 zusammengefasst werden und gemeinsam einen Verbraucher M speisen. Da nach dem Stand der Technik (Fig. 4a) das Heizelement 12 gemäß der Richtlinie ECE R110 für Fahrzeuge innerhalb des von den Abschaltventilen 13 geschützten Bereichs angeordnet sein muss, ist im Stand der Technik eine Zusammenschaltung zweier Tanksysteme 1 erst im Normaltemperaturbereich, d.h. verbraucherseitig der Heizelemente 12 möglich, was mehrfache Heizelemente 12 erfordert.

Im Gegensatz dazu ermöglicht die Ventilschaltung 27 des erfindungsgemäßen Tanksystems 16 eine Schutzabschaltung bereits im kryogenen Bereich, sodass zwei oder mehr erfindungsgemäße Tanksysteme 16 zu einer Anlage 40 an einem Zusammenführungspunkt 41 vereinigt werden, welcher behälterseits des Heizelements 12 liegt. Die so vereinigten Speiseleitungen 11 können damit über ein einziges gemeinsames Heizelement 12 geführt werden.

Es versteht sich, dass das Tanksystem 16 über weitere Komponenten verfügen kann, wie Fig. 2 beispielhaft zeigt. So kann der Behälterdruck P₁, wenn gewünscht, an einer Anzeige 42 z.B. an der Bedienkonsole 18 ausgegeben werden. Ferner kann die Speiseleitung 11 über ein z.B. manuelles Sperrventil 43 an der Bedienkonsole 18 verfügen. Überdies könnte in die Bedienkonsole 18 eine optionale Entlüftungsleitung 44 mit Anschlussstutzen 45 und Absperrventil 46 geführt sein.

Aus Sicherheitsgründen können ferner ein Abdampfventil 47, welches bei Verwendung von LNG beispielsweise bei einem Behälterdruck P₁ von 16 bar öffnet, und optional ein Not-Abdampfventil 48, welches beispielsweise bei einem Behälterdruck P₁ von 22 bar öffnet, z.B. in der ersten Entnahmeleitung 7 vorgesehen sein.

Das Heizelement 12 kann jeweils ein Wärmetauscher sein, welcher über eine Anschlussschiene 49 des Tanksystems 16 mit Abwärme vom Fahrzeugmotor gespeist wird. Die Anschlussschiene 49 kann ferner einen Anschlussstutzen 50 zum Anschließen des Verbrauchers M, z.B. Fahrzeugmotors, an die Speiseleitung 11 abstützen. Auch können die Abdampf- und/oder Notabdampfventile 47, 48 über die Anschlussschiene 49 an einen Abgasstrang (Vent Stack) 51 des Fahrzeugs angeschlossen werden.

Eine Motorsteuerung (Engine Control Unit, ECU) 52 des Fahrzeugs kann über die Anschlussschiene 49 mit dem Tanksystem 16, der Ventilbaugruppe 17 bzw. der Ventilschaltung 27 verbunden sein, beispielsweise mit einem Füllstandssensor 53 im Behälter 2, der Ventilschaltung 27, dem ersten und zweiten Schaltventil 28, 29 und/oder dem ersten und zweiten Drucksensor 30, 32.

Die Motorsteuerung 52 kann auch die Steuerung des ersten und zweiten Schaltventils 28, 29 bzw. der Ventilschaltung 27 übernehmen, d.h. die Steuerung 31 der Ventilschaltung 27 kann ein Teil der Motorsteuerung 52 sein.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Tanksystem, umfassend
einen Behälter (2) zur Aufnahme eines Zweiphasengemischs (3) aus Kryogas (4) und Kryoflüssigkeit (5) mit einem ersten Drucksensor (30) zum Messen des Behälterdrucks (P₁),
eine von einem Kopfbereich (6) des Behälters (2) ausgehende erste Entnahmeleitung (7) für Kryogas (4) und eine von einem Bodenbereich (8) des Behälters (2) ausgehende zweite Entnahmeleitung (9) für Kryoflüssigkeit (5),
eine Speiseleitung (11) zum Speisen eines Verbrauchers (M), in welche beide Entnahmeleitungen (7, 9) münden, und
ein Heizelement (12), durch welches die Speiseleitung (11) geführt ist,
wobei eine an den ersten Drucksensor (30) angeschlossene Ventilschaltung (27), welche zumindest zwischen einem ersten Schaltzustand (S₁), in welchem die erste Entnahmeleitung (7) geöffnet und die zweite Entnahmeleitung (9) zumindest in Richtung des Verbrauchers (M) geschlossen ist, und einem zweiten Schaltzustand (S₂), in welchem die erste Entnahmeleitung (7) zumindest in Richtung des Verbrauchers (M) geschlossen und die zweite Entnahmeleitung (9) geöffnet ist, umschaltbar ist, und
wobei die Ventilschaltung (27) den ersten Schaltzustand (S₁) einnimmt, wenn der gemessene Behälterdruck (P₁) größer als ein vorgegebener erster Schwellwert (σ₁) ist, und den zweiten Schaltzustand (S₂) einnimmt, wenn der gemessene Behälterdruck (P₁) kleiner als der erste Schwellwert (σ₁) ist, das Tanksystem ferner umfassend einen mit der Ventilschaltung (27) verbundenen zweiten Drucksensor (32) zum Messen eines verbraucherseitigen Speisedrucks (P₂) der Speiseleitung (11),
wobei die Ventilschaltung (27) zwischen den genannten Schaltzuständen (S₁, S₂) und einem dritten Schaltzustand (S₃) umschaltbar ist, in welchem beide Entnahmeleitungen (7, 9) geöffnet sind, **gekennzeichnet dadurch, dass** die Ventilschaltung (27) den dritten Schaltzustand (S₃) einnimmt, wenn der gemessene Behälterdruck (P₁) größer als der erste Schwellwert (σ₁) und zugleich der gemessene Speisedruck (P₂) kleiner als ein vorgegebener zweiter Schwellwert (σ₂) ist.

2. Tanksystem nach Anspruch 1, **dadurch gekennzeichnet, dass** die Ventilschaltung (27) ferner zwischen den genannten Schaltzuständen (S₁, S₂, S₃) und einem vierten Schaltzustand umschaltbar ist, in welchem beide Entnahmeleitungen (7, 9) zumindest in Richtung des Verbrauchers (M) geschlossen sind.

3. Tanksystem nach Anspruch 1 oder 2, **dadurch gekennzeichnet, dass** der erste Schwellwert (σ₁) kleiner als 12 bar, bevorzugt kleiner als 10 bar, besonders bevorzugt zwischen etwa 7 bar und etwa 9 bar ist.

4. Tanksystem nach einem der Ansprüche 1 bis 3, **dadurch gekennzeichnet, dass** die Ventilschaltung (27) für die zweite Entnahmeleitung (9) ein Rückschlagventil (34) hat, welches diese bei Schließen in Richtung des Verbrauchers (M) in Richtung des Behälters (2) geöffnet lässt.

5. Tanksystem nach einem der Ansprüche 1 bis 4, **dadurch gekennzeichnet, dass** die Ventilschaltung (27) für die erste Entnahmeleitung (7) ein Rückschlagventil (33) hat, welches diese bei Schließen in Richtung des Verbrauchers (M) in Richtung des Behälters (2) geöffnet lässt.

6. Tanksystem nach einem der Ansprüche 1 bis 5, **dadurch gekennzeichnet, dass** die zweite Entnahmeleitung (9) eine Pumpe (35) für Kryoflüssigkeit (5) hat.

7. Tanksystem nach einem der Ansprüche 1 bis 6, **dadurch gekennzeichnet, dass** die Ventilschaltung (27) ein die erste Entnahmeleitung (7) öffnendes und zumindest in Richtung des Verbrauchers (M) schließendes erstes steuerbares Schaltventil (28) und ein davon separates die zweite Entnahmeleitung (9) öffnendes und zumindest in Richtung des Verbrauchers (M) schließendes zweites steuerbares Schaltventil (29) umfasst.

8. Tanksystem nach Anspruch 7, **dadurch gekennzeichnet, dass** die Schaltventile (28, 29) elektromagnetische Schaltventile sind und dass die Ventilschaltung (27) eine an den zumindest einen Drucksensor (30; 32) angeschlossene Steuerelektronik umfasst, welche dafür ausgebildet ist, Messwerte von dem zumindest einen Drucksensor (30; 32) zu empfangen und in Abhängigkeit davon die Schaltventile (28, 29) zu steuern.

9. Anlage mit zumindest zwei Tanksystemen nach einem der Ansprüche 1 bis 8, **dadurch gekennzeichnet, dass** die Speiseleitungen (11) der Tankssysteme (16) vereinigt über ein einziges gemeinsames Heizelement (12) geführt sind.

10. Verfahren zum Steuern eines Tanksystems, welches einen Behälter (2) zur Aufnahme eines Zweiphasengemischs (3) aus Kryogas (4) und Kryoflüssigkeit (5), eine von einem Kopfbereich (6) des Behälters (2) ausgehende erste Entnahmeleitung (7) für Kryogas (4) und eine von einem Bodenbereich (8) des Behälters (2) ausgehende zweite Entnahmeleitung (9) für Kryoflüssigkeit (5), eine Speiseleitung (11) zum Speisen eines Verbrauchers (M), in welche beide Entnahmeleitungen (7, 9) münden, und ein Heizelement (12) umfasst, durch welches die Speiseleitung (11) geführt ist, mit den Schritten:
Messen des Behälterdrucks (P₁) und,
wenn der Behälterdruck (P₁) größer als ein vorgegebener erster Schwellwert (σ₁) ist, Öffnen der ersten Entnahmeleitung (7) und Schließen der zweiten Entnahmeleitung (9) zumindest in Richtung des Verbrauchers (M),
andernfalls Schließen der ersten Entnahmeleitung (7) zumindest in Richtung des Verbrauchers (M) und Öffnen der zweiten Entnahmeleitung (9),
**gekennzeichnet durch** die zusätzlichen Schritte:
Messen eines verbraucherseitigen Speisedrucks (P₂) der Speiseleitung (11) und,
wenn der Behälterdruck (P₁) größer als der erste Schwellwert (σ₁) und zugleich der Speisedruck (P₂) kleiner als ein vorgegebener zweiter Schwellwert (σ₂) ist, Öffnen beider Entnahmeleitungen (7, 9).

## Claims

1. Tank system, comprising
a vessel (2) for receiving a two-phase mixture (3) of cryogenic gas (4) and cryogenic liquid (5) with a first pressure sensor (30) for measuring the vessel pressure (P₁),
a first extraction line (7) outgoing from a top region (6) of the vessel (2) for cryogenic gas (4) and a second extraction line (9) outgoing from a bottom region (8) of the vessel (2) for cryogenic liquid (5),
a feed line (11) for feeding a consumer (M), into which feed line (11) both extraction lines (7, 9) lead, and
a heating element (12), through which the feed line (11) passes,
wherein a valve circuit (27) connected to the first pressure sensor (30) is switchable at least between a first switching state (S₁), in which the first extraction line (7) is open and the second extraction line (9) is closed at least in the direction of the consumer (M), and a second switching state (S₂), in which the first extraction line (7) is closed at least in the direction of the consumer (M) and the second extraction line (9) is open, and
wherein the valve circuit (27) is in the first switching state (S₁) when the measured vessel pressure (P₁) is greater than a predetermined first threshold (σ₁) and is in the second switching state (S₂) when the measured vessel pressure (P₁) is less than the first threshold (σ₁),
the tank system further comprising
a second pressure sensor (32) connected to the valve circuit (27) for measuring a consumer-side feeding pressure (P₂) of the feed line (11),
wherein the valve circuit (27) is switchable between the said switching states (S₁, S₂) and a third switching state (S₃), in which both extraction lines (7, 9) are open,
**characterized in that**
the valve circuit (27) is in the third switching state (S₃) when the measured vessel pressure (P₁) is greater than the first threshold (σ₁) and at the same time the measured feeding pressure (P₂) is less than a predetermined second threshold (σ₂).

2. Tank system according to claim 1, **characterized in that** the valve circuit (27) is further switchable between the said switching states (S₁, S₂, S₃) and a fourth switching state, in which both extraction lines (7, 9) are closed at least in the direction of the consumer (M).

3. Tank system according to claims 1 or 2, **characterized in that** the first threshold (σ₁) is less than 12 bar, preferably less than 10 bar, particularly preferably between approximately 7 bar and approximately 9 bar.

4. Tank system according to any one of the claims 1 to 3, **characterized in that** the valve circuit (27) has a check valve (34) for the second extraction line (9), which check valve (34) leaves the latter open in the direction of the vessel (2) when closing in the direction of the consumer (M).

5. Tank system according to any one of the claims 1 to 4, **characterized in that** the valve circuit (27) has a check valve (33) for the first extraction line (7), which check valve (33) leaves the latter open in the direction of the vessel (2) when closing in the direction of the consumer (M).

6. Tank system according to any one of the claims 1 to 5, **characterized in that** the second extraction line (9) has a pump (35) for cryogenic liquid (5).

7. Tank system according to any one of the claims 1 to 6, **characterized in that** the valve circuit (27) comprises a first controllable switch valve (28) opening the first extraction line (7) and closing it at least in the direction of the consumer (M), separate therefrom, a second controllable switch valve (29) opening the second extraction line (9) and closing it at least in the direction of the consumer (M).

8. Tank system according to claim 7, **characterized in that** the switch valves (28, 29) are electromagnetic switch valves and that the valve circuit (27) comprises a control electronics connected to the at least one pressure sensor (30; 32), which control electronics is configured to receive measurement values from the at least one pressure sensor (30; 32) and, in dependence thereof, control the switching valves (28, 29).

9. Arrangement with at least two tank systems according to any one of the claims 1 to 8, **characterized in that** the feed lines (11) of the tank systems (16) pass jointly through a single common heating element (12).

10. Method for controlling a tank system, which comprises a vessel (2) for receiving a two-phase mixture (3) of cryogenic gas (4) and cryogenic liquid (5), a first extraction line (7) outgoing from a top region (6) of the vessel (2) for cryogenic gas (4) and a second extraction line (9) outgoing from a bottom region (8) of the vessel (2) for cryogenic liquid (5), a feed line (11) for feeding a consumer (M), into which feed line (11) both extraction lines (7, 9) lead, and a heating element (12), through which the feed line (11) passes, with the steps of:
measuring the vessel pressure (P₁) and,
if the vessel pressure (P₁) is greater than a predetermined first threshold (σ₁), opening the first extraction line (7) and closing the second extraction line (9) at least in the direction of the consumer (M),
else closing the first extraction line (7) at least in the direction of the consumer (M) and opening the second extraction line (9),
**characterized by** the further steps of:
measuring a consumer-side feeding pressure (P₂) of the feed line (11) and,
if the vessel pressure (P₁) is greater than the first threshold (σ₁) and at the same time the feeding pressure (P₂) is less than a predetermined second threshold (σ₂), opening both extraction lines (7, 9).

## Revendications

1. Système de réservoir comprenant
un récipient (2) pour la réception d'un mélange à deux phases (3) à base de gaz cryogénique (4) et de liquide cryogénique (5), doté d'un premier capteur de pression (30) pour la mesure de la pression du récipient (P₁),
une première conduite de prélèvement (7) pour du gaz cryogénique (4) partant d'une zone supérieure (6) du récipient (2) et une seconde conduite de prélèvement (9) pour du liquide cryogénique (5) partant d'une zone de fond (8) du récipient (2),
une conduite d'alimentation (11) pour l'alimentation d'un consommateur (M), dans laquelle débouchent les deux conduites de prélèvement (7, 9), et
un élément de chauffage (12) à travers lequel est menée la conduite d'alimentation (11),
où un circuit soupape (27) est connecté au premier capteur de pression (30), lequel circuit soupape peut être commuté au moins entre un premier état de commutation (S₁), dans lequel la première conduite de prélèvement (7) est ouverte et la seconde conduite de prélèvement (9) est fermée au moins en direction du consommateur (M), et un deuxième état de commutation (S₂), dans lequel la première conduite de prélèvement (7) est fermée au moins en direction du consommateur (M) et la seconde conduite de prélèvement (9) est ouverte, et
où le circuit soupape (27) adopte le premier état de commutation (S₁) lorsque la pression du récipient (P₁) mesurée est supérieure à une première valeur de seuil (σ₁), et adopte le deuxième état de commutation (S₂) lorsque la pression de récipient (P₁) mesurée est inférieure à la première valeur de seuil (σ₁),
le système de réservoir comprenant en outre
un deuxième capteur de pression (32) relié au circuit soupape (27) pour la mesure d'une pression d'alimentation (27) du côté d'un consommateur de la conduite d'alimentation (11),
où le circuit soupape (27) peut être commuté entre lesdits états de commutation (S₁, S₂) et un troisième état de commutation (S₃) dans lequel les deux conduites de prélèvement (7, 9) sont ouvertes, **caractérisé en ce que**
le circuit soupape (27) adopte le troisième état (S₃) lorsque la pression de récipient (P₁) mesurée est supérieure à la première valeur de seuil (σ₁) et que simultanément la pression d'alimentation (P₂) mesurée est inférieure à une deuxième valeur de seuil (σ₂) prédéfinie.

2. Système de réservoir selon la revendication 1, **caractérisé en ce que** le circuit soupape (27) peut en outre être commuté entre lesdits états de commutation (S₁, S₂, S₃) et un quatrième état de commutation dans lequel les deux conduites de prélèvement (7, 9) sont fermées au moins en direction du consommateur (M).

3. Système de réservoir selon la revendication 1 ou 2, **caractérisé en ce que** la première valeur de seuil (σ₁) est inférieure à 12 bar, de préférence inférieure à 10 bar, de manière particulièrement préférée est entre environ 7 bar et environ 9 bar.

4. Système de réservoir selon l'une des revendications 1 à 3, **caractérisé en ce que** le circuit soupape (27) a un clapet anti-retour (34) pour la deuxième conduite de prélèvement (9), lequel laisse celle-ci ouverte en direction du récipient (2) lors de la fermeture en direction du consommateur (M).

5. Système de réservoir selon l'une des revendications 1 à 4, **caractérisé en ce que** le circuit soupape (27) a un clapet anti-retour (33) pour la première conduite de prélèvement (7), lequel laisse celle-ci ouverte en direction du récipient (2) lors de la fermeture en direction du consommateur (M).

6. Système de réservoir selon l'une des revendications 1 à 5, **caractérisé en ce que** la deuxième conduite de prélèvement (9) a une pompe (35) pour le liquide cryogénique (5).

7. Système de réservoir selon l'une des revendications 1 à 6, **caractérisé en ce que** le circuit soupape (27) comprend une première vanne de commutation (28), pouvant être commandée, ouvrant la première conduite de prélèvement (7) et la fermant au moins en direction du consommateur (M), et une deuxième vanne de commutation (29), séparée de celle-ci, pouvant être commandée, ouvrant la deuxième conduite de prélèvement (9) et la fermant au moins en direction du consommateur (M).

8. Système de réservoir selon la revendication 7, **caractérisé en ce que** les vannes de commutation (28, 29) sont des vannes de commutation électromagnétiques et que le circuit soupape (27) comprend une électronique de commande en connexion avec l'au moins un capteur de pression (30 ; 32), laquelle est conçue pour recevoir des valeurs de mesure de l'au moins un capteur de pression (30 ; 32) et commander les vannes de commutation (28, 29) en fonction de celles-ci.

9. Installation avec au moins deux systèmes de réservoir selon l'une des revendications 1 à 8, **caractérisée en ce que** les conduites d'alimentation (11) des systèmes de réservoirs (16) sont menées réunies par un seul élément de chauffage (12) commun.

10. Procédé de commande d'un système de réservoir, lequel comprend un récipient (2) pour la réception d'un mélange à deux phases (3) à base de gaz cryogénique (4) et de liquide cryogénique (5), une première conduite de prélèvement (7) partant d'une zone supérieure (6) du récipient (2) pour du gaz cryogénique (4) et une deuxième conduite de prélèvement (9) partant d'une zone de fond (8) du récipient (2) pour du liquide cryogénique (5), une conduite d'alimentation (11) pour l'alimentation d'un consommateur (M), dans laquelle débouchent les deux conduites de prélèvement (7, 9), et un élément de chauffage (12), à travers lequel est menée la conduite d'alimentation (11), avec les étapes :
de mesure de la pression du réservoir (P₁), et
lorsque la pression du récipient (P₁) est supérieure à une première valeur de seuil (σ₁) prédéfinie, d'ouverture de la première conduite de prélèvement (7) et de fermeture de la deuxième conduite de prélèvement (9) au moins en direction du consommateur (M),
autrement, de fermeture de la première conduite de prélèvement (7) au moins en direction du consommateur (M) et d'ouverture de la deuxième conduite de prélèvement (9),
**caractérisé par** les étapes complémentaires suivantes :
de mesure d'une pression d'alimentation (P₂) du côté consommateur de la conduite d'alimentation (11), et
lorsque la pression du récipient (P₁) est supérieure à la première valeur de seuil (σ₁) et simultanément la pression d'alimentation (P₂) est inférieure à une seconde valeur de seuil (σ₂) prédéfinie, d'ouverture des deux conduites de prélèvement (7, 9).
